# EUROPEAN PATENT APPLICATION

(11) **EP 1 143 310 A2**
(43) Date of publication of application: **10.10.2001**
(21) Application number: 01301661.3
(22) Date of filing: 23.02.2001
(51) Int. Cl.: G04C 10/00, G04G 1/00

(54) **Wrist-carried device**

(30) Priority: 22.03.2000 JP 2000080724
(71) Applicant: SEIKO INSTRUMENTS INC., Chiba-shi, Chiba 261 (JP)
(72) Inventor: Ito, Takashi, c/o Seiko Instruments Inc., Chiba-shi, Chiba (JP)
(74) Representative: Sturt, Clifford Mark

(57) **Abstract**

A wrist-fitting belt is attached to a device body including a display portion and operating buttons. An extended portion is formed on the device body so as to project from a side portion of the device body in the same direction as the direction of the width of the wrist-fitting belt, and a battery chamber for accommodating a battery is formed in the extended portion.

## Description

This invention relates to a wrist-carried device, such as a multifunction watch, a wristwatch-type portable communication device or a portable audio device, and, more particularly, to a wrist-carried device using a comparatively thick battery, such as a lithium-ion secondary battery.

A conventional wrist-carried device such as a multifunction watch has a sealed box type device body having a display portion and operating buttons or the like in its obverse surface. The device body is fitted on a wrist of a user with a wrist-fitting belt around the user's wrist. Ordinarily, in this kind of wrist-fitted device it is structured so that a battery chamber is provided on the reverse surface of the device body, and a small battery such as a button battery is loaded in the battery chamber.

It is desirable that newly-developed wrist-carried devices as it becomes multifunctional should have a long duration time (long life). Therefore, high-capacity batteries are required as a power supply source for the wrist-carried devices. However, if a battery is designed so as to have a larger capacity, the thickness of its entire body is increased.

On the other hand, in practical design, the thickness of the device body is limited to 15 to 20 mm. From the viewpoint of the wrist-fitting characteristic and design, it is desired for the device body to be thin. In conventional wrist-carried devices, all essential components, i.e. a display portion, a battery chamber, etc., are placed one on another in the direction of the thickness of the device body, and there is, therefore, a limit to the reduction in the thickness of the device body. For example, in a case where a lithium-ion secondary battery is used as a long-life battery in a wrist-carried device, such as a wristwatch type portable communication device or a portable audio device, the device body with lithium-ion secondary battery is considerably increased in thickness in comparison with that of a wrist-carried device using a button battery.

As a solution to the above-described problem, provision of a battery chamber in the wrist-fitting belt may be considered. However, in this case the wrist-fitting belt is caused to have a thick and complicated structure, so that the wrist-fitting characteristic of the wrist-fitting belt deteriorates. Further, if the wrist-fitting belt becomes thinner and the wrist-fitting belt is exposed outside from the sleeve of a garment, the possibility of the wrist-fitting belt being brought into contact with an external object is increased, and damage to the battery chamber portion can occur easily.

In a portable device having an RF circuit, an antenna or the like, if a battery is placed in the vicinity of the RF circuit, the antenna or the like, there is a risk of the RF circuit, the antenna or the like being influenced by the battery. Therefore, particularly with a wrist-carried device which requires to be reduced in size, it is necessary that the components be placed in a restricted space so that the RF circuit, the antenna and the like are arranged so as not to be influenced by a battery.

This invention has been achieved to solve the above-described problems, and an object of the present invention is to provide a wrist-carried device having a structure in which the thickness of the device body can be reduced even if a comparatively thick battery such as a lithium-ion secondary battery is used, and which is structured so that the possibility of damage to a battery chamber is reduced, and also to provide a wrist-carried device in which an RF circuit, an antenna and the like are not influenced by a battery.

To achieve the above-described object, a wrist-carried device according to a first aspect of this invention is provided with a device body including a display portion and operating buttons, with a wrist-fitting belt attached thereto, an extended portion is formed on the device body so as to project from a side portion of the device body in the same direction as the direction of the width of the wrist-fitting belt, and a battery chamber for accommodating a battery is formed in the extended portion.

According to this structure, a battery chamber is formed in the extended portion projecting from a side portion of the device body in the same direction as the direction of the width of the wrist-fitting belt. Therefore, even if a comparatively thick battery such as a lithium-ion secondary battery is used, the thickness of the device body can be reduced and the extended portion can be arranged on the sleeve side to reduce the possibility of damage to the battery chamber portion.

In the wrist-carried device, according to a second aspect of this invention, the extended portion has a bottom surface flush with that of the device body and is thinner than the device body.

In the wrist-carried device, according to a third aspect of this invention, the device body incorporates an RF circuit and an antenna for wireless communication, and the RF circuit and the antenna, and the battery chamber of the extended portion are located apart from each other as seen along a plane.

Embodiments of the present invention will now be described by way of further example only and with reference to the accompanying drawings, in which:6
Fig. 1 is a perspective view of an embodiment of a wrist-carried device in accordance with the present invention;
Fig. 2 is a schematic cross-sectional view of an embodiment of the wrist-carried device in accordance with the present invention; and
Fig. 3 is a perspective view of a wrist-fitted state of the wrist-carried device in accordance with the present invention.

An embodiment of a wrist-carried device in accordance with this invention will be described below in detail with reference to the accompanying drawings.

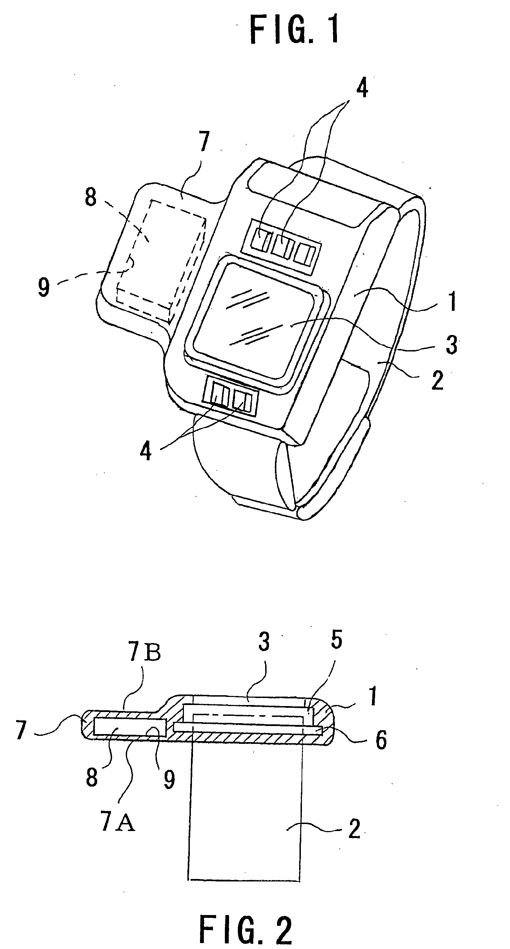

Figs. 1 to 3 show an embodiment of a wrist-carried device in accordance with this invention. The wrist-carried device has a sealed box type device body 1 which is fitted on a wrist of a user with a wrist-fitting belt 2 around the user's wrist.

The device body 1 has, for example, a wireless telephone function such as that of the PHS (Personal Handyphone System) and has, on its obverse side, a display portion 3 formed by a liquid crystal display panel having status indications necessary for a wireless telephone and capable of displaying information, time, etc., and operating buttons 4 for inputting data necessary for the wireless telephone and for performing selection, setting, etc. and is incorporated with an electrical circuit device 5 for the wireless telephone, and an RF circuit, an antenna, etc., for wireless communication.

The device body 1 has a tongue-like extended portion 7 formed integrally in its side portion, the extended portion 7 projecting in the same direction as the direction of the width of the wrist-fitting belt 2. The extended portion 7 is provided on the left-hand side of the device body 1 (in the nine o'clock direction of the watch) as viewed from the front of the device body 1 assuming that the wristwatch is worn around the left wrist.

The extended portion 7 has a bottom surface 7A flush with that of the device body 1, is thinner than the device body 1, and has an upper surface 7B one step lower than the upper surface of the device body 1. A battery chamber 9 for accommodating a lithium-ion secondary battery 8 in the form of a plate is provided in the extended portion 7. Thus, the battery chamber 9 in the extended portion 7 is placed in a position remote from the RF circuit and the antenna 6 in the device body 1 from one side portion as seen along a plane. The battery may alternatively be a primary battery, such as an alkaline battery or an alkaline-manganese battery, or any other secondary battery, such as a nickel-cadmium battery.

As described above, the battery chamber 9 is provided in the extended portion 7 projecting in the same direction as the direction of the width of the wrist-fitting belt 2 from one side portion of the device body 1. Therefore, even if the lithium-ion secondary battery 8 or the like is used, the thickness of the device body 1 can be reduced in comparison with the case where a battery chamber for such a battery is formed in the device body 1. Thus, the wrist-fitting characteristic and the portability of the wrist-carried device can be improved.

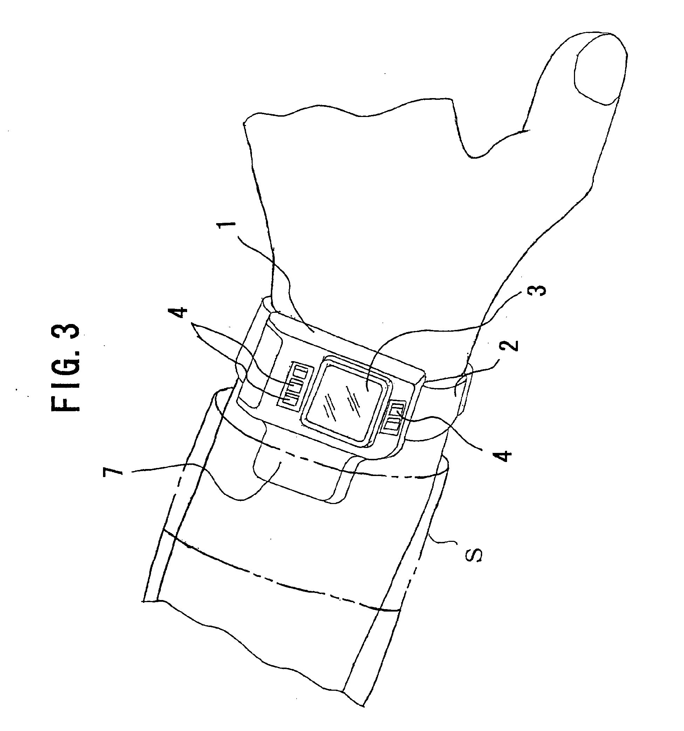

The extended portion 7 can be arranged on the sleeve (long sleeve S) side of the edge of a sleeve of a user's garment, as shown in Fig. 3, and the extended portion 7 can be inserted in the sleeve (long sleeve S) since the extended portion 7 is thinner than that of the device body 1. Therefore, as the conspicuousness of the wrist-carried device in the wrist-fitted state becomes less, the battery chamber portion cannot easily be damaged by collision against an object, or the like.

Also, since the battery chamber 9 in the extended portion 7 and the RF circuit and the antenna 6 in the device body 1 are located apart from each other as seen along a plane, the lithium-ion secondary battery 8 in the battery chamber 9 does not hinder the antenna functions of the RF circuit and the antenna 6, so that high-performance wireless communication is ensured.

The wrist-carried device constructed as described above is not limited to the type having the wireless telephone function, and the present invention can also be applied in the same way to a wristwatch type GPS, an MP3 player, etc.

As can be understood from the above description, in the wrist-carried device according to the first aspect of the present invention, a battery chamber is provided in an extended portion projecting from a side portion of the device body in the same direction as the direction of the width of the wrist-fitting belt, so that, even if a comparatively thick battery such as a lithium-ion secondary battery is used, the thickness of the device body can be reduced. Further, the extended portion can be arranged on the sleeve side of the extended portion to reduce the possibility of damage to the battery chamber portion.

In the wrist-carried device according to the second aspect of the present invention, the extended portion has a bottom surface flush with that of the device body and is thinner than the device body, and with the extended portion arranged on the sleeve side, can be inserted in the sleeve, thereby reducing the conspicuousness of the wrist-carried device in the wrist-fitted state and ensuring that the battery chamber portion cannot easily be damaged by collision against an object, or the like.

In the wrist-carried device according to the third aspect of the present invention, the device body is incorporated in an RF circuit and an antenna for wireless communication and is arranged so that the RF circuit and the antenna, and the battery chamber in the extended portion are located apart from each other as seen along a plane, thereby preventing the battery in the battery chamber from impeding the functions of the RF circuit and the antenna, and ensuring high-performance wireless communication.

## Claims

1. A wrist-carried device comprising:
a device body including a display and operating buttons;
a wrist-fitting belt attached to the device body;
wherein an extended portion is formed on the device body so as to project from a side portion of the same in the same direction as the direction of the width of the wrist-fitting belt, and a battery chamber for accommodating a battery is formed in the extended portion.

2. A wrist-carried device according to Claim 1, wherein
the extended portion has a bottom surface flush with that of the device body and is smaller in height than the device body.

3. A wrist-carried device according to Claim 1,
wherein the device body incorporates an RF circuit and an antenna for wireless communication, and the RF circuit and the antenna, and the battery chamber in the extended portion are located apart from each other as seen along a plane.

4. A wrist-carried device according to Claim 2,
wherein the device body incorporates an RF circuit and an antenna for wireless communication, and the RF circuit and the antenna, and the battery chamber in the extended portion are located apart from each other as seen along a plane.
